# EUROPEAN PATENT SPECIFICATION

(11) **EP 0 424 341 B1**
(45) Date of publication and mention of the grant of the patent: **03.08.1994**
(21) Application number: 90850334.5
(22) Date of filing: 16.10.1990
(51) Int. Cl.: F16H 57/04

(54) **An arrangement for lubricating gear wheels**
Schmiereinrichtung für ein Zahnrädergetriebe
Dispositif de lubrification des engrenages

(30) Priority: 19.10.1989 SE 8903453
(43) Date of publication of application: 24.04.1991
(73) Proprietor: AB VOLVO, 405 08 Göteborg (SE)
(72) Inventor: Johannesson, Stig-Erik, S-442 41 Kungälv (SE)
(74) Representative: Hellborg, Torild

(56) References cited:
- EP-A- 0 301 779
- SE-B- 405 634
- US-A- 2 408 336
- US-A- 3 789 956
- US-A- 4 480 493

## Description

The invention relates to an arrangement for lubricating gear wheels in transmission gearing, said arrangement including at least one conduit which is intended to deliver lubricant under pressure and which has an outlet orifice is located adjacent the gear wheel to be lubricated.

It is known to lubricate the teeth of the gear wheels of transmission gears by spraying oil through nozzles which are positioned relatively close to the gear wheel concerned. In this way, the teeth are lubricated one after the other as the teeth pass the nozzle. Although heavily loaded transmissions, such as the planetary gearing of vehicle gearboxes, require a relatively large quantity of lubricant, lubrication is nevertheless effected intermittently despite this large requirement. Furthermore, it is difficult to lubricate the gear teeth effectively with the aid of the lubricant and, at the same time, cool the teeth of, for instance, a sun gear of a planetary transmission, with known systems.

The object of the present invention is to provide for the lubrication of the gear wheels of a gear transmission an arrangement which will eliminate the aforedescribed drawbacks and which will enable gear wheels of highly loaded transmission gearing to be lubricated effectively while simultaneously cooling the gear wheels. This object is achieved in accordance with the invention in that the or each conduit at the end adjacent the gear wheel to be lubricated discharges into at least one circular-arcuate groove provided in an element which abuts a frontal end surface of said gear wheel, wherein said groove or each groove is open towards the gear wheel and extends in the circumferential direction thereof and is arranged concentrically with the gear wheel and has an outer defining surface whose radius is somewhat larger than the radius of the root surface of the teeth of said gear wheel.

Advantageous embodiments of the invention are set forth in the depending Claims.

The invention will now be described in more detail with reference to the accompany drawings, in which
Figure 1 is a longitudinal section view of part of a gearbox which incorporates an arrangement according to one embodiment of the invention, and
Figure 2 is an end view of one part of a gear wheel in the arrangement according to Figure 1, as seen from the right in Figure 1.

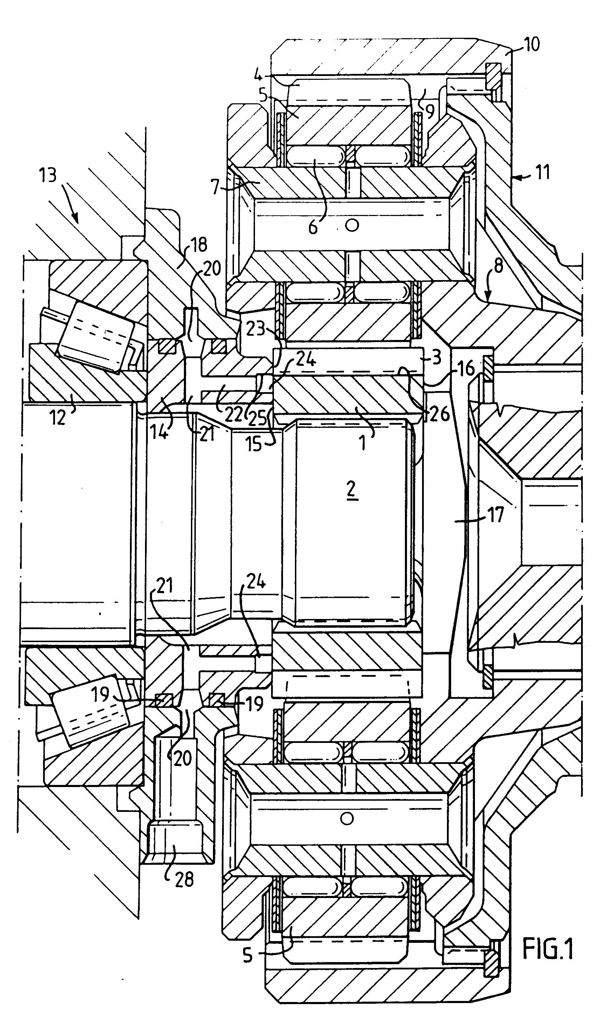

Figure 1 is a sectional view of part of a gearbox. Since the remaining parts of the gearbox do not form part of the invention, they have not been shown. The part illustrated in Figure 1 is a planetary gear means having a sun wheel 1 which is fitted on an axle 2 with the aid of a spline joint. The teeth 3 of the sun wheel 1 mesh with the teeth 4 of a number of planet wheels 5 which are journaled on journal pins 7 by means of bearings 6, said journal pins being, in turn, carried by a planet wheel holder 8. The teeth 4 of the planet wheels 5 also mesh with the teeth 9 of a ring wheel 10, which is carried, in turn, by a ring wheel holder 11.

The axle 2 is journaled in a bearing 12 which is mounted in a fixed part 13 of the gearbox housing. Abutting the inner ring of the bearing 12 is an intermediate element 14 in the form of a ring. One end surface 15 of the sun wheel 1 is in abutment with the ring 14. Abutting the other end surface 16 of the sun wheel 1 is a thrust means 17 which has the form of the head of a screw screwed into a threaded hole in the end of the axle 2. The sun wheel 1 is, in this way, held in place on the axle 2, together with the ring 14.

The ring 14 rotates together with the axle 2, the sun wheel 1 and the inner ring of the bearing 12. Located radially outwards of the ring 14 is a cover 18 which is fixedly connected to the fixed part 13. Arranged between the fixed cover 18 and the rotatable ring 14 are two sealing rings 19 which provide a seal between the cover 18 and the ring 14. A circumferential groove 20 is arranged between the two sealing rings 19. The groove 20 of the illustrated embodiment is formed partly in the ring 14 and partly in the cover 18, although it is also conceivable, of course, to form the groove 20 solely in one of these two parts. A number of borings 21 extend substantially radially from the circumferential groove 20 into the ring 14. Borings 22 axially adjoin these radial borings 21 and extend from the radial borings 21 in a direction towards the end surface 23 of the ring 14 abutting the sun wheel 1.

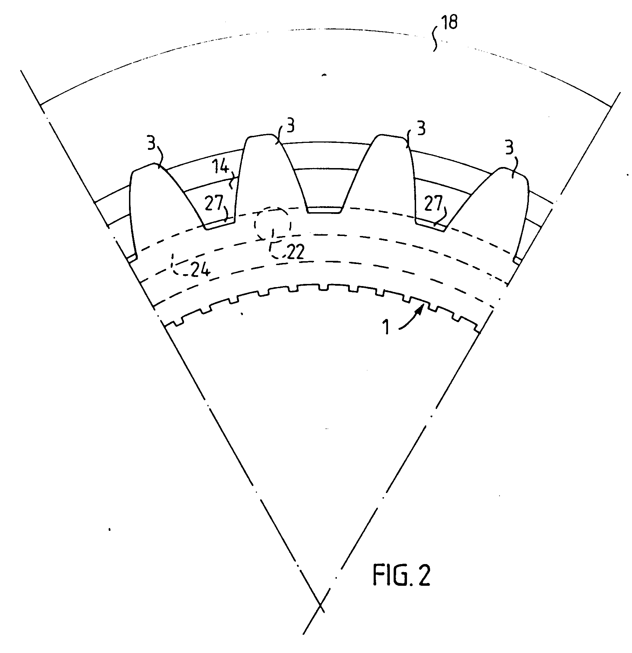

Each of the axial borings 22 discharges into a circle-arcuate groove 24 formed in the ring 14 and open towards the end surface 23 of said ring. In the illustrated embodiment, the groove 24 extends around the full circumference of the ring 14, although it is, of course, conceivable to configure the groove 24 from smaller, separate parts should this be desirable. The groove 24 is configured concentrically with the sun wheel 1 and has a radial outer defining surface which lies radially somewhat outside the bottom surface 26 of the spaces between the teeth 3 on the sun wheel 1. Narrow gaps 27 are formed in this way in the spaces between the teeth 3, where the groove 24 is open in towards the teeth interspeces (see in particular Figure 2).

The cover 18 is provided at at least one location thereon with a connecting device 28 for lubricant under pressure. This lubricant is delivered under pressure from a pressure source not shown. The connecting device 28 communicates with the circumferential groove 20 and when lubricant under pressure is delivered through the connecting device 28, the lubricant is distributed in the groove 20 and flows from said groove through the radial borings 21 and the axial borings 22, into the groove 24. The lubricant is distributed in the groove 24 around the full circumference thereof and is ejected under pressure through the narrow gaps 27. Thus, pressurized lubricant is injected into the spaces between the teeth 3 on the sun wheel 1. Because the groove 24 extends around the full circumference of the ring 40, lubricant will be ejected simultaneously through all gaps 27, which means that all teeth 3 on the sun wheel 1 will be lubricated continuously. This provides highly effective lubrication and simultaneous cooling of all teeth 3 on the sun wheel 1. Furthermore, the gaps 27 will ensure that all lubricant arrives at the correct location, i.e. that the lubricant is used for lubricating and cooling the teeth 3, which results in less wastage of lubricant than experienced with earlier known methods, in which the oil is ejected through nozzles towards the gear wheel at a given distance therefrom.

It will be understood that the invention is not restricted to the aforedescribed exemplifying embodiment and that modifications can be made within the scope of the following Claims. For instance, instead of using a ring 14 which rotates together with the sun wheel, it is possible to use a stationary ring whose end surface slides against the end surface of the sun wheel. Similarly, the groove 24 need not extend around the full circumference of the ring 14, since it is conceivable to provide a plurality of grooves which are of circle-arcuate configuration and extend over limited parts of said circumference. The inventive arrangement can also be used, of course, for lubricating other kinds of gear transmissions than planetary gear transmissions.

## Claims

1. An arrangement for lubricating gear wheels (1) of a gear transmission, said gear wheels (1) having teeth on the peripheral surface thereof, said arrangement including at least one conduit (20, 21, 22) for delivering lubricant under pressure, said conduit having an outlet orifice located adjacent the gear wheel (1) to be lubricated, **characterized** in that the or each conduit (20, 21, 22) at the end adjacent said gear wheel (1) discharges into at least one circle-arcuate groove (24) in an element (14) abutting a frontal end surface (15) of the gear wheel (1); and in that the groove (24) or each groove is open towards the gear wheel (1) and extends in the circumferential direction thereof and is arranged concentrically with the gear wheel (1) and has an outer defining surface (25) whose radius is somewhat larger than the radius of the root surface (26) of the teeth of the gear wheel (1).

2. An arrangement according to Claim 1, **characterized** in that the groove (24) extends around the full circumference of the element (14).

3. An arrangement according to Claim 1 or 2, **characterized** in that the element is a ring (14) which is intended to rotate together with the gear wheel (1).

4. An arrangement according to Claim 1 or 2, **characterized** in that the element is a ring which is fixedly mounted in the gear transmission housing.

## Patentansprüche

1. Anordnung zum Schmieren von Zahnrädern (1) eines Zahnradgetriebes, wobei die Zahnräder (1) an ihrem Außenumfang Zähne haben und wobei die Anordnung wenigstens eine Leitung (20, 21, 22) zum Zuführen eines Schmiermittels unter Druck umfaßt, wobei die Leitung eine Auslaßöffnung hat, die nahe des zu schmierenden Zahnrades (1) angeordnet ist,
dadurch **gekennzeichnet**,
daß die oder jede Leitung (20, 21, 22) an demjenigen Ende, das dem Zahnrad (1) benachbart ist, sich in wenigstens eine kreisförmig gebogene Nut (24) in einem Teil (14) öffnet, das seinerseits an eine Stirnfläche (15) des Zahnrades (1) anstößt; und
daß die Nut (24) oder jede Nut in Richtung auf das Zahnrad (1) offen ist und sich in dessen Umfangsrichtung erstreckt und ferner so angeordnet ist, daß sie mit dem Zahnrad (1) konzentrisch verläuft und eine äußere Wandfläche (25) hat, deren Radius geringfügig größer ist als der Radius des Fußkreises (26) der Zähne des Zahnrades (1).

2. Anordnung nach Anspruch 1, dadurch gekennzeichnet, daß die Nut (24) sich über den vollen Umfang des Teiles (14) erstreckt.

3. Anordnung nach einem der Ansprüche 1 oder 2, dadurch gekennzeichnet, daß das Teil (14) ein Ring ist, der dazu bestimmt ist, zusammen mit dem Zahnrad (1) umzulaufen.

4. Anordnung nach einem der Ansprüche 1 oder 2, dadurch gekennzeichnet, daß das Teil (14) ein Ring ist, der im Gehäuse des Getriebes fest angebracht ist.

## Revendications

1. Ensemble de lubrification de roues dentées (1) d'une transmission, les roues dentées (1) ayant des dents à leur surface périphérique, l'ensemble comprenant au moins un conduit (20, 21, 22) destiné à transmettre du lubrifiant sous pression, le conduit ayant un orifice de sortie placé près de la roue dentée (1) qui doit être lubrifiée, caractérisé en ce que le conduit ou chaque conduit (20, 21, 22), à l'extrémité adjacente à la roue dentée (1), débouche dans au moins une gorge en arc de cercle (24) formée dans un élément (14) qui est en butée contre une surface d'extrémité frontale (15) de la roue dentée (1), et en ce que la gorge (24) ou chaque gorge débouche vers la roue dentée (1) et est disposée dans la direction circonférentielle de celle-ci et est placée concentriquement à la roue dentée (1) et a une surface externe (25) dont le rayon est un peu supérieur au rayon de la surface (26) comprenant les pieds des dents de la roue dentée (1).

2. Ensemble selon la revendication 1, caractérisé en ce que la gorge (24) est placée sur toute la circonférence de l'élément (14).

3. Ensemble selon la revendication 1 ou 2, caractérisé en ce que l'élément est un anneau (14) destiné à tourner avec la roue dentée (1).

4. Ensemble selon la revendication 1 ou 2, caractérisé en ce que l'élément est un anneau monté à demeure dans le boîtier de la transmission.
